# EUROPEAN PATENT SPECIFICATION

(11) **EP 1 496 718 B1**
(45) Date of publication and mention of the grant of the patent: **15.12.2010**
(21) Application number: 02703471.9
(22) Date of filing: 27.02.2002
(51) Int. Cl.: H04W 8/00

(54) **METHOD AND SYSTEM FOR VIRTUAL ROAMING AND COMMUNICATION IN CELLULAR SYSTEM**
VERFAHREN UND SYSTEM ZUM VIRTUELLEN ROAMING UND ZUR KOMMUNIKATION IN EINEM ZELLULAREN SYSTEM
PROCEDE ET SYSTEME D'ITINERANCE ET DE COMMUNICATION VIRTUELLES DANS UN SYSTEME CELLULAIRE

(43) Date of publication of application: 12.01.2005
(73) Proprietor: Huawei Technologies Co., Ltd., Shenzhen, Guangdong 518057 (CN)
(72) Inventor: LI, Jianhua, Huawei Service Centre Bldg., Schenzhen, Guangdong 518057 (CN); DING, Hao, Huawei Service Centre Bldg., Schenzhen, Guangdong 518057 (CN); FU, Xiaoyang, Huawei Service Centre Bldg., Schenzhen, Guangdong 518057 (CN); LIN, Yuedong, Huawei Service Centre Bldg., Schenzhen, Guangdong 518057 (CN); LI, Long, Huawei Service Centre Bldg., Shenzhen, Guangdong 518057 (CN)
(74) Representative: Körber, Martin Hans
(86) International application number: PCT/CN2002/000115
(87) International publication number: WO 2003/073781

(56) References cited:
- WO-A-00/07403
- WO-A-97/08912
- CN-A- 1 225 787
- CN-A- 1 318 962
- US-A- 5 878 348
- US-A- 5 890 063
- US-A- 6 157 832
- US-A1- 2001 030 952

## Description

### Field of the Technology

The present invention relates to communication technique in cellular mobile communication system, and more particularly, to a method and system for implementing intercommunication and interlink through roaming freely between mobile networks which are located in distinctive regions, belong to different service providers and have diversified formats among cellular communication system.

### Background of the Invention

In prior cellular mobile communication system, every mobile subscriber has a home location, i.e. a home network. When the subscriber roams in an external network outside his home network and makes inbound and outbound calls, even the another party of the inbound or outbound call is located in the roaming area, long distance fee will incur between the calling and called subscribers because voice channel resources of local network in the roaming area and his home network are occupied simultaneously, which will increase burden of usage on mobile phone of the subscriber. Moreover, when the call is made between different areas, especially between the regions across boundary of two countries, although geographical distance between the locations is only several kilometers, but different operation fees and charging policies in these areas (or countries) involved usually make communication fee increasing sharply, because the communication fee contains very expensive even overburdened international communication fee, which largely hinders information exchange and intercommunication between users across boundary of the countries.

In prior circumstances, because there are various operation fees and charging policies in different areas (or countries), as well as diversity of standard protocols applied in different cellular mobile systems, although technicians in the field have studied the problems and tabled some proposals on it, as far as the applicant knows, there are still no comparatively sound solution for the above problems.

In the patent whose publicity number is CN1225787A and name is "system and method for implementing multiple home location registers for single mobile station in cellular communication system", the applicant of that patent application proposed a technical scheme on multiple home location registers for single mobile station. In the scheme, networking and system architecture is consistent with that of prior cellular mobile network, the only modification lies in adding a software command that instructs the system to select a Home Location Register(HLR) in all possible external networks where the subscriber may roaming in, and assigning a number in roaming area to the subscriber roaming in the local area through the software command, so as to reduce a part of long distance fee. Although this scheme can realize the function of reducing long distance fee incurred by roaming communications, because long distance transmission link between multiple interlinking networks cannot be chosen freely, it is impossible to actually reduce long distance communication fee even international communication fee. Meanwhile, because a software command that instructs the system to select a HLR in roaming area is added in this scheme, it is necessary for every associated HLR to make software updating. In addition, because exchange of user data is needed among different HLRs, it is necessary to implement interaction of signaling messages among the HLRs, however, the incompatibility between the signaling message and prior cellular mobile network makes it difficulty to interconnect between the two HLRs, thereby limiting application of the technical scheme.

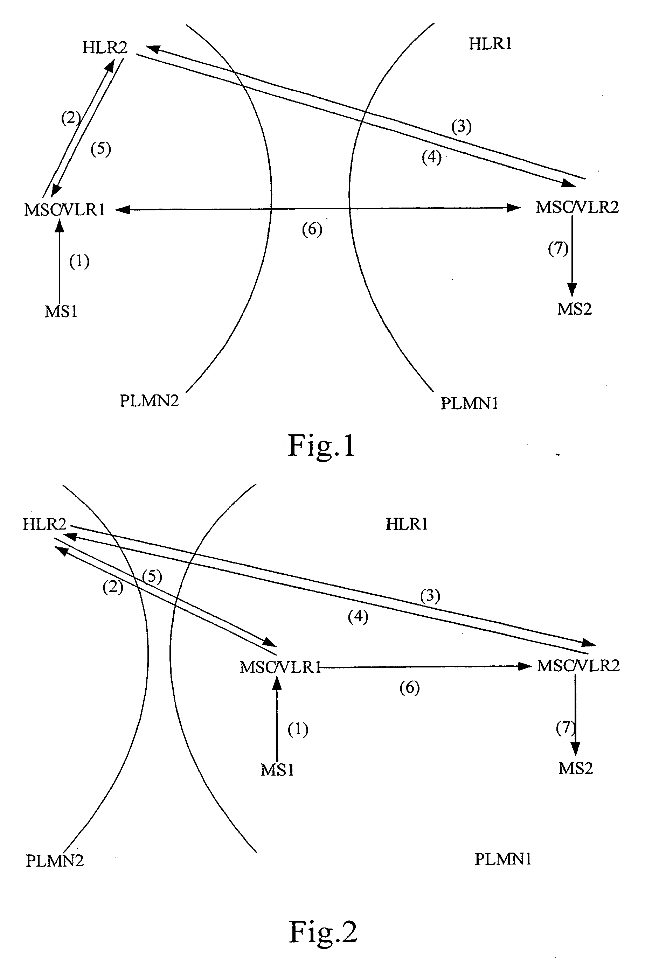

Figures 1 to 4 illustrate a calling process in prior GSM network. The figures illustrate the case when Mobile Station 2 (MS2) which is registered in HLR2 is roaming between Public Land Mobile Network 1 (PLMN1) and Public Land Mobile Network 2 (PLMN2) as a called subscriber. Detail description on other cases such as Mobile Station 1 (MS1) roams as a called subscriber or MS2 roams as a calling subscriber will be omitted because of similar principle and flow. In the figures, Mobile Switching Center/Visitor Location Register 1 (MSC/VLR1) and Mobile Switching Center /Visitor Location Register 2 (MSC/VLR2) which are registered in PLMN1 and PLMN2 respectively, and they are network devices in prior mobile network, i.e. Visitor Mobile Switching Center (VMSC).

As shown in Fig.1, MS2 is roaming in PLMN1, MS1 in PLMN2 initiates a call to MS2. The MSC/VLR1 and MSC/VLR2 are registered respectively in PLMN1 and PLMN2, while HLR1 and HLR2 are registered respectively in PLMN1 and PLMN2 (denotation of the reference signs in Fig.1 is applicable to those in Fig.2 to Fig.4).
In step (1), MS1 registered in MSC/VLR1 initiates a call to MS2.
In step (2), MSC/VLR1 initiates a request for obtaining routing address to HLR2 of the called terminal MS2.
In step (3), after searching database and finding that MS2 is roaming in PLMN1, HLR2 initiates a request for obtaining roaming number to MSC/VLR2 in PLMN1.
In step (4), MSC/VLR2 returns the roaming number of MS2 to HLR2.
In step (5), HLR2 returns a response message to MSC/VLR1, and returns the roaming number of MS2 to MSC/VLR1.
In step (6), after analyzing the roaming number of MS2, MSC/VLR1 establishes a voice channel between MS1 and MS2 through international gateway office or gateway office between networks, to enable the communication connection between two PLMN networks.
In step (7), MS2 receives the call until either of the sides hangs up the phone.

It can be seen from above steps, it is necessary to employ several HLRs (HLR1 and HLR2) in calling process within prior GSM network, but HLR1 and HLR2 are two different physical entities and must be HLRs in mobile networks with the same format (e.g. both are GSM system or CDMA system); in the calling process, HLR2 obtains roaming number of MS2 directly from MSC/VLR2, and then returns the number to MSC/VLR1; only when what HLR2 returns to MSC/VLR1 is a real roaming number that indicates real roaming position of MS2 in order to enable the MSC/VLR1 finding MS2 corresponding to MSC/VLR2 with the roaming number through the international gateway office or gateway office between networks, it is possible to establish a voice channel between the two PLMN networks, of course, long distance fee even international communication toll in this calling process is inevitable.

Now referring to Fig.2, MS2 is roaming in PLMN1, while MS1 in PLMN1 initiates a call to MS2.
In step (1), MS1 registered in MSC/VLR1 initiates a call to MS2.
In step (2), MSC/VLR1 initiates a request for obtaining routing address to HLR2 of the called terminal MS2.
In step (3), after searching database and finding that MS2 is roaming in PLMN1, HLR2 initiates a request for obtaining roaming number to MSC/VLR2 in PLMN1.
In step (4), MSC/VLR2 returns roaming number of MS2 to HLR2.
In step (5), HLR2 returns a response message to MSC/VLR1, and returns the roaming number of MS2 to MSC/VLR1.
In step (6), after analyzing the roaming number of MS2, MSC/VLR1 establishes a voice channel between MS1 and MS2 in PLMN1, to enable communication channel connection within the same PLMN network.
In step (7), MS2 receives the call until either of the sides hangs up the phone.

It can be seen from the above steps, it is necessary for MS2 to implement location registry at HLR2 of PLMN2 through international signaling transmission while roaming from PLMN2 to PLMN1 in calling process within prior GSM network; after MS2 arriving PLMN1 from PLMN2, if network system of PLMN2 is different with that of PLMN1, even when MS2 uses a device (mobile phone) that has the same format with that of PLMN1, but because formats adopted in HLR2 and MSC/VLR2 are different, MS2 can by no means to make location registry in HLR2 through MSC/VLR2; in case that MS2 is called, MSC/VLR1 needs to obtain routing information of MS2 at HLR2 through international signaling transmission, only by this means, MS2 which is roaming within PLMN1 and MSC/VLR2 can be accessible; while if MSC/VLR1 and HLR2 are network equipment with different formats, signaling processes will be incompatible.

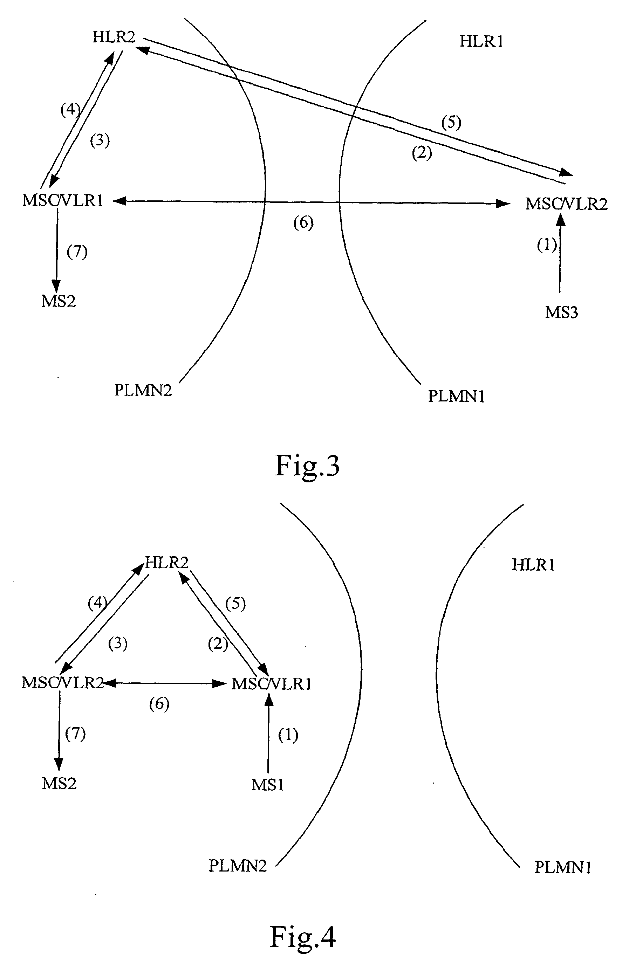

As shown in Fig.3, MS2 is roaming in PLMN2, while MS3 in PLMN1 initiates a call to MS2.
In step (1), MS3 roaming in MSC/VLR2 initiates a call to MS2.
In step (2), MSC/VLR2 initiates a request for obtaining routing address to HLR2 of the called terminal MS2.
In step (3), after searching database and finding that MS2 is roaming in PLMN2, HLR2 initiates a request for obtaining roaming number to MSC/VLR1 in PLMN2.
In step (4), MSC/VLR1 returns roaming number of MS2 to HLR2.
In step (5), HLR2 returns a response message to MSC/VLR2, and then returns roaming number of MS2 to MSC/VLR2.
In step (6), after analyzing roaming number of MS2, MSC/VLR2 establishes a voice channel between MS3 and MS2 through international gateway office or gateway office between networks, realizing channel connection between two PLMN networks.
In step (7), MS2 receives the call until either of the sides hangs up the phone.

The problems existing in the above steps are similar with those discussed in Fig.1, therefore, no description will be discussed hereinafter.

Now referring to Fig.4, the local mobile station in PLMN2 initiates a call to MS2.
In step (1), MS1 roaming in MSC/VLR1 of PLMN2 initiates a call to MS2.
In step (2), MSC/VLR1 initiates a request for obtaining routing address to HLR2 of the called terminal MS2.
In step (3), after searching database and finding that MS2 is also roaming in PLMN2, HLR2 initiates a request for obtaining roaming number to MSC/VLR2 in PLMN2.
In step (4), MSC/VLR2 returns the roaming number of MS2 to HLR2.
In step (5), HLR2 returns a response message to MSC/VLR1, and returns the roaming number of MS2 to MSC/VLR1.
In step (6), after analyzing the roaming number of MS2, MSC/VLR1 establishes a voice channel between MS1 and MS2 in PLMN2, to enable communication channel connection within the same PLMN.
In step (7), MS2 receives the call until either of the sides hangs up the phone.

Because this calling process happens within the same network, it will by no means fall in the scope of discussion in the present invention.

In a word, in case of different charging policies in prior cellular mobile network, it is substantially valuable to realize the object of cutting long distance fee as well as implementing free choice of the long distance transmission routes while roaming freely and communicating across mobile networks which are located in distinctive regions, belong to different service providers and have diversified formats.

### Summary of the Invention

It is an object to provide a method and system for implementing virtual roaming and intercommunication among cellular system, in order to realize the function of roaming freely and intercommunication so as to cut long distance fee, and enable the subscribers to choose suitable radio network optionally according to quality and utilizing cost of the network and therefore communicate freely.

According to a first aspect of the invention there is provided a system for implementing virtual roaming and intercommunication among cellular systems as set out in Claim 1. Preferred features of this aspect are set out in Claims 2-4.

According to a second aspect of the invention there is provided a method for implementing virtual roaming and intercommunication among cellular systems as set out in Claim 5. Preferred features of this aspect are set out in Claims 6-17.

In the system for implementing virtual roaming and intercommunication in a cellular system according to the present invention, a master HLR is set among all PLMNs requiring virtual roaming and intercommunication, and a GMSC is added in each PLMN requiring virtual roaming and intercommunication, the master HLR implements centralized control over all GMSCs, and thereby this system according to the present invention is formed. In the method for implementing virtual roaming across different networks according to the present invention, multiple numbers are allocated to one mobile terminal utilizing virtual HLRs corresponding to each network in the same physical entity, i.e., the master HLR, one number corresponding to a certain numbering plan will be assigned according to position of actual roaming network of the subscriber, and the voice channel will be blocked automatically through the automatic match between the called number and location of actual roaming network.

The master HLR in the virtual roaming and intercommunication system has similar function with HLR in prior PLMN, but it is a enhanced HLR, which can not only be compatible with functions of prior HLR, but also be compatible with functions of diversified PLMN networks which are located in different regions, belong to different service providers, and have different formats. Setting a master HLR that is used for centralized management among all PLMNs requiring virtual roaming and intercommunication may be equivalent to adding a HLR of virtual roaming and intercommunication system in each PLMN of the virtual roaming and intercommunication system, which easily enable the mobile subscriber to enjoy the function of freely roaming and intercommunication in all PLMNs requiring virtual roaming and intercommunication, meanwhile long distance fee while roaming across networks, regions and formats will be reduced also.

There is a GMSC in each PLMN requiring virtual roaming, interlinking and intercommunication, the GMSC that can provide roaming and intercommunication services has obviously different function with the GMSC that provides interconnection with Public Switching Telephone Network (PSTN) in prior PLMN. The GMSC according to the present invention can provide international long distance fee switching function to the mobile subscriber who opens account in the master HLR according to the present invention, and thereby, realizing the object of selecting long distance transmission routes and reducing communication fee.

The technical schemes according to the present invention can be realized through appending certain devices on the prior cellular mobile network rather than modifying any software and hardware in prior equipment, it is possible to implement roaming intercommunication crosses various networks, distinctive regions and diversified communication formats using virtual roaming function provided in the system and method according to the present invention. Therefore, long distance fee can be reduced, and more importantly, long distance transmission routing selection can be realized.

### Brief Description of the Drawings

Fig.1 is a schematic diagram illustrating the first calling process in prior GSM network.
Fig.2 is a schematic diagram illustrating the second calling process in prior GSM network.
Fig.3 is a schematic diagram illustrating the third calling process in prior GSM network.
Fig.4 is a schematic diagram illustrating the fourth calling process in prior GSM network.
Fig.5 is a schematic diagram illustrating architecture of the cellular mobile virtual roaming system according to the present invention.
Fig.6 is a schematic diagram illustrating the first interception mode of the first calling process for implementing virtual roaming and intercommunication among cellular system according to the present invention.
Fig.7. is a schematic diagram illustrating the second interception mode of the first calling process for implementing virtual roaming and intercommunication among cellular system according to the present invention.
Fig.8 is a schematic diagram illustrating the third interception mode of the first calling process for implementing virtual roaming and intercommunication among cellular system according to the present invention.
Fig.9 is a schematic diagram illustrating the second calling process for implementing virtual roaming and intercommunication among cellular system according to the present invention.
Fig.10 is a schematic diagram illustrating the third calling process for implementing virtual roaming and intercommunication among cellular system according to the present invention.

### Detailed Description of the Invention

The invention will be described in more detail hereinafter with reference to the drawings.

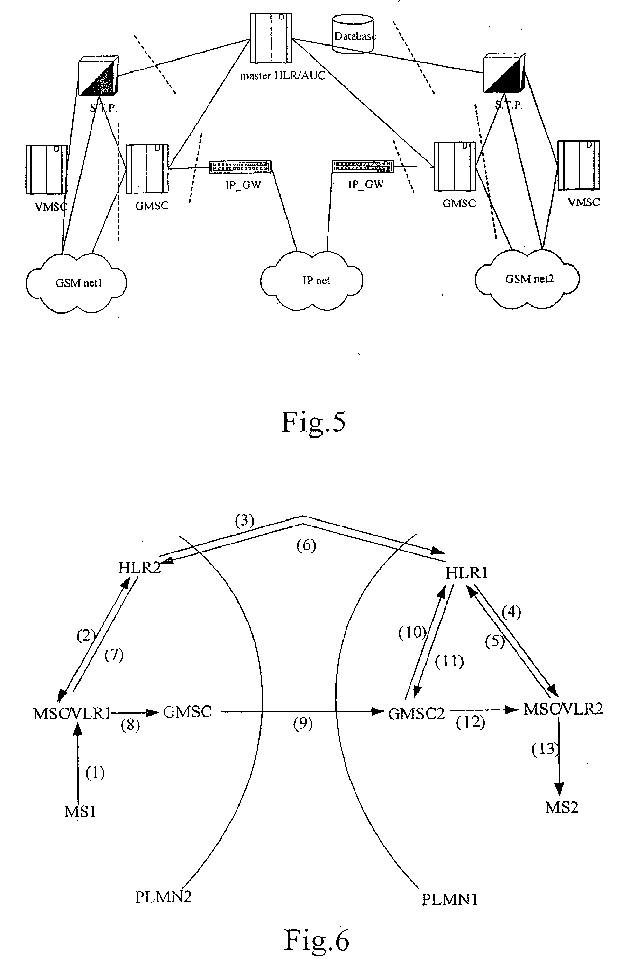

As shown in Fig.5 which is a simple schematic diagram illustrating architecture of a cellular mobile virtual roaming system according to the present invention, there are only two interlinked and intercommunicated PLMNs, i.e. GSM net1 and GSM net2 (they can also be the networks with another formats). The master Home Location Register/Authentication Center (master HLR/AUC) and two GMSCs belonging to two PLMNs that are marked with dashed lines are newly added entities in the cellular mobile virtual roaming system according to the present invention. The long distance transmission network in the middle of the figure can adopt either Internet Protocol (IP net) or other transmission modes, such as other traditional long distance transmission networks.

The master HLR/AUC, including database, is connected to each GMSC, and connected to any of PLMN GSM net1 and GSM net2 requiring virtual roaming and intercommunication via Signaling Transfer Point (S.T.P). Each GMSC is connected to local PLMN GSM net1 or GSM net2, and further connected to the long distance transmission network (IP net or any existing long distance transmission network) via a gateway equipment (IP_GW). The VMSCs in the drawings are visitor mobile switching centers of the PLMN GSM net1 and GSM net2 respectively, which are connected to local PLMN GSM net1 or GSM net2 and its S.T.P respectively.

As shown in the figure, in order to establish a cellular mobile virtual roaming system according to the present invention, it is necessary to establish a master HLR/AUC in the PLMN networks with virtual multiple service providers, multiple formats, multiple regions over prior cellular mobile communication system, as well as multiple GMSCs belonging to each PLMN network respectively, which makes it possible to enable each subscriber (the called party) who opens account in the cellular mobile virtual roaming system to roam freely across diversified PLMN networks, and meanwhile reduce payment on long distance fee.

The GMSC in each PLMN is no longer the GMSC in traditional sense, because it does not act as a gateway between a fixed network and a mobile network for intercommunication and interlinking, it is much like a tandem office in function, which can assist the master HLR/AUC to realize the function of channel interception for selected call number, enabling each GMSC obtain real roaming number of the called subscriber ultimately from the master HLR/AUC, and implementing control over the communication channel.

The master HLR/AUC according to the present invention possesses not only the functions of HLR/AUC in traditional sense, but also functions of implementing multiple HLR numbers, to realize the functions of virtual HLR/AUC in multiple PLMNs of multiple service providers. Besides, in order to implement intercommunication between local MS subscribers, the master HLR/AUC can also recognize location information of the MS subscriber automatically, and insert corresponding Mobile Station ISDN (MSISDN) number of the MS subscriber. What is more, in order to implement the function of voice channel interception, the master HLR/AUC can also make analysis and judgment automatically based on roaming position of the MS subscriber, and assign a temporary virtual subscriber roaming number to the MS subscriber, provide real roaming number of the subscriber, and match and switch the real roaming number with a temporary virtual subscriber roaming number in order to implement voice channel interception. In order to enable the MS roaming across mobile networks with different formats, the master HLR/AUC can be compatible with MS data of diversified formats, and meanwhile, can be compatible to recognize signaling of different formats.

Intercommunication among networks of different service providers, diversified systems and distinctive regions mainly are materialized in location updating and calling. Now referring to Fig.6 to Fig.10, the process of implementing location updating and calling in cellular mobile virtual roaming system according to the present invention will be described in more detail hereinafter.

In view of clearness, first assuming two PLMN network service providers in cellular mobile virtual roaming system shown in Fig.6 to Fig.10 are Operator1 and Operator2 respectively. Operator1 has a network PLMN1 that is GSM format or CDMA format, while Operator2 has a network PLMN2 that is CDMA format or GSM format, in this case, communication between these two networks is a process across service providers, across diversified systems and different regions, which means, numbering plan for MSISDN of the two service providers are different, assuming numbering plan for MSISDN of service provider Operator1 is MSN1, whose number is N1, while numbering plan for MSISDN of the service provider Operator2 is MSN2, whose number is N2.

Assuming that, two kinds of numbering plans: MSN1 and MSN2 are adopted for MSISDN in the master HLR of the virtual roaming system; the master HLR in the virtual roaming system has two HLR identification numbers (HLR IDs), which are HLR numbers of the networks PLMN1 and PLMN2 respectively: HLR ID1 and HLR ID2; the International Mobile Subscriber Identity (IMSI) of the system adopts IMSI of the service provider Operator1.

Definition of location updating in the present invention is that: according to the difference between numbers of MSC/VLR (MSC/VLR1 and MSC/VLR2) after the called mobile station making location updating, the master HLR assigns mobile station numbers that are consistent with numbering plan of the network where the called subscriber is roaming to the MSC/VLR1 or MSC/VLR2 that is roaming within the PLMN1 or PLMN2 respectively: MSN1 or MSN2, which means sending different HLR ID numbers according diversified numbers of the MSC/VLR in local area where the called subscriber is roaming, which includes HLR numbers: HLR ID1 and HLR ID2 in the two networks of PLMN1 and PLMN2. By this means, it is possible to realize the function of two or more virtual HLR entities, and implement centralized management on different roaming networks, assign MS number according to position of the roaming area, thereby, communication fee of both inbound and outbound calls can be reduced.

Further assuming MSb is a mobile station (whose account has been opened) in the virtual roaming system according to the present invention, a mobile station MSa which registered in Operator2 and PLMN2 (using MSN2 numbering plan) and is roaming in PLMN2 initiates a call to MSb, in this case, there are maybe two circumstances:
(1) While MSa calling number N1 of MSb that is obtained with the MSN1 numbering plan, regarding that MSb and MSa are not in the same PLMN2 at the moment, the MSC/VLR2 of PLMN2 in which the originator MSa is located may directly switch to the international gateway office, in this case, if the originator MSa has no international authority, the call will be forbidden.
(2) While the Msa calling number N2 of the MSb that is obtained with the MSN2 numbering plan, regarding that it is subscriber number in the PLMN2 of the Operator2 at the moment, the MSC/VLR2 of PLMN2 in which the originator MSa is located may initiate a call through the virtual roaming system of the present invention.

Similarly, if the originator who is registered in PLMN1 initiates a call to the subscriber who opened account in the master HLR in the virtual roaming system according to the present invention, if the number obtained from the MSN1 numbering plan (N1) is dialed, the call can be established, otherwise, the originator can initiate a call to the subscriber who adopts MSN2 numbering plan (N2) only when the originator possesses international authority.

Now referring Fig.6 to Fig.10, location updating, rules of calling and calling process according to technical scheme according to the present invention will be described in detail hereinafter.

Figures 6 to 10 illustrate the case when the MS2 which is registered in HLR2 acts as a called party when it is roaming across PLMN1 and PLMN2.

Now referring to Fig.6, similar to the case illustrated in Fig.1, while MS2 is roaming in PLMN1, MS1 in PLMN2 initiates a call to MS2, here, the called number is the number N2 that is assigned according to the MSN2 numbering plan. In the figures, HLR1 and HLR2 are two logic points in one entity, i.e., the master HLR according to the present invention; GMSC and GMSC2 are gateway mobile switching centers that are registered in PLMN2 and PLMN1 respectively according to the present invention; while MSC/VLR1 and MSC/VLR2 are two MSC/VLRs registered in PLMN1 and PLMN2 and corresponding to MS1 and MS2 respectively.
In step (1), MS1 roaming in PLMN2 and MSC/VLR1 initiates a call to MS2, with the called number of N2 (it must be N2 according to the rules of calling, else, if the called number is N1, MS1 should possess international authority).
In step (2), MSC/VLR1 initiates a request for obtaining routing information to HLR2 based on the called number N2.
In step (3), after finding MS2 is roaming in PLMN1 through searing the database, HLR2 notifies HLR1 to obtain routing information.
In step (4), after receiving notification of obtaining routing information, HLR1 initiates a request for obtaining roaming number with N1 to MSC/VLR2.
In step (5), MSC/VLR2 returns real roaming number of MS2, i.e., MSRN1, to HLR1.
In step (6), after storing the real roaming number MSRN1 of MS2, HLR1 notifies HLR2 that HLR1 has already obtained the real roaming number MSRN1 of MS2, and at the same time, assigns a feigned roaming number MSRN2 which indicates location of GMSC2 and returns it to HLR2, stores the correspondence relationship between the real roaming number MSRN1 of MS2 and the feigned roaming number MSRN2.
In step (7), HLR2 returns a response message to MSC/VLR1 with the feigned roaming number MSRN2 being the roaming number.
In steps (8) and (9), MSC/VLR1 establishes a voice channel to GMSC2 via GMSC with the feigned roaming number MSRN2 as the called number.
In step (10), GMSC2 makes called analysis on the feigned roaming number MSRN2, and initiates a request for obtaining routing information to HLR1.
In step (11), HLR1 searches the correspondence relationship between real roaming number MSRN1 and feigned roaming number MSRN2 and obtains the real roaming number MSRN1 of MS2, and returns the MSRN1 to GMSC2 as a response message.
In step (12), GMSC2 controls establishment of the subsequent voice channel via MSC/VLR2.
In step (13), MS2 receives the call until either of the sides hangs up the phone.

As shown in Fig.6, the difference between the calling process and that in Fig.1 are as follows: HLR1 and HLR2 are actually the same physical entity, and can be virtualized into HLRs registered in different networks, which are equivalent to two diversified entities from logics, wherein, network format of these logic entities can be identical or different, especially can be different, for instance, one is GSM, another is CDMA. HLR2 obtains the roaming number of MS2 from MSC/VLR2 through HLR1 in PLMN1 that is virtualized by MSC/VLR2 rather than obtains the number directly from MSC/VLR2 of PLMN1, therefore, the master HLR according to the present invention can actually support two different logic entities HLR1 and HLR2 with diversified formats, wherein, HLR1 supports network format of PLMN1, while HLR2 supports network format of PLMN2, compatibility conversion of signaling with different formats between HLR1 and HLR2 is implemented through interaction between internal messages. What HLR2 returns to MSC/VLR1 is a feigned roaming number that indicates the location of GMSC2, rather than the real roaming number that identifies real position of MS2, in order to enable MSC/VLR1 to address the location of GMSC according to the feigned roaming number, after that, GMSC and GMSC2 obtain the real roaming number that indicates real location information of the MS2 from HLR1 through request messages for obtaining routing information, and then, GMSC2 blocks and switches the calling channel of MS 1 to PLMN1 via the designated transmission network according to the real roaming number of MS2.

Because PLMN1 and PLMN2 in Fig.6 have different formats, therefore, it is necessary to set a GMSC2 in PLMN1, the feigned roaming number that HLR2 returns indicates location information of GMSC2 in PLMN1 rather than indicates location of GMSC in PLMN2. After the voice channel is blocked and switched to GMSC2 in PLMN1, because GMSC2 has the same format with MSC/VLR2, GMSC2 can obtain real roaming number of MS2 directly from HLR1, and then address to MSC/VLR2 according to the real roaming number of MS2.

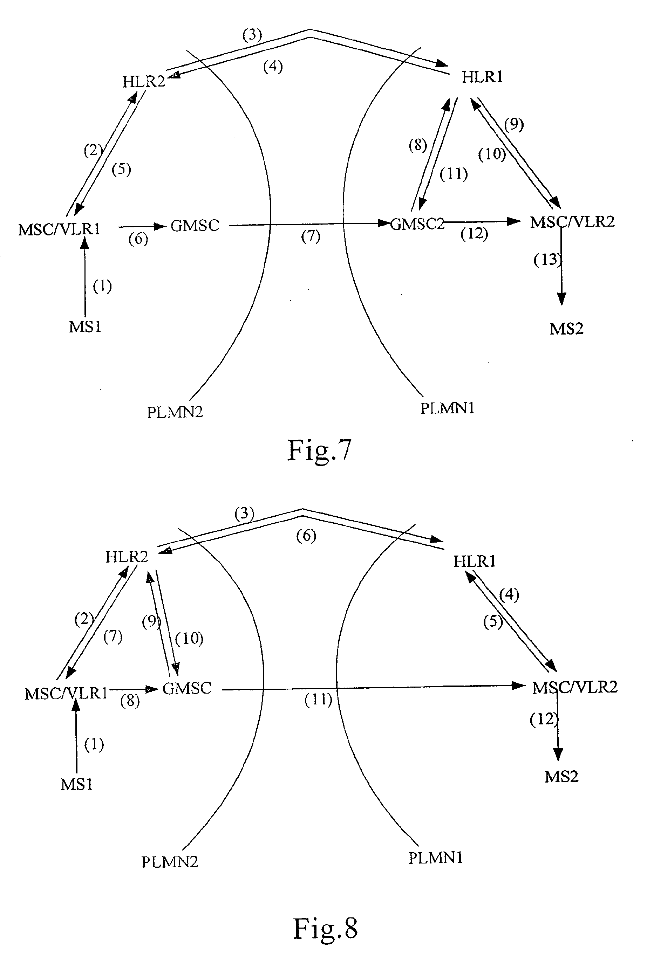

Now referring to Fig.7 which is similar with the case in Fig.6, another interception mode is adopted.
In step (1), MS1 roaming in MSC/VLR1 initiates a call to MS2, here, the called number is N2.
In step (2), MSC/VLR1 initiates a request for obtaining routing information to HLR2 based on the called number N2.
In step (3), after finding MS2 is roaming in PLMN1 through searing the database, HLR2 notifies HLR1 to obtain the routing information.
In step (4), after receiving notification of obtaining the routing information, HLR1 finds it is an internal message initiated by HLR2, and assigns a feigned roaming number MSRN2 that indicates position of GMSC2, and then returns the number to HLR2 rather than obtains routing information from MSC/VLR2.
In step (5), HLR2 returns a routing response to MSC/VLR1, with MSRN2 as roaming number.
In steps (6) and (7), MSC/VLR1 establishes a voice channel to GMSC2 through GMSC, with MSRN2 as the called number.
In step (8), GMSC2 makes called analysis on MSRN2, and sends a request for obtaining routing information to HLR1.
In step (9), HLR1 initiates a request for obtaining roaming number with N1 to MSC/VLR2.
In step (10), MSC/VLR2 returns the roaming number of the MS2, i.e., MSRN1, to HLR1.
In step (11), HLR1 returns a routing response to GMSC2, with MSRN1 as the roaming number.
In step (12), GMSC2 controls establishment of the subsequent voice channel.
In step (13), MS2 receives the call.

The calling process in Fig.8 is similar with that in Fig.6, but still another interception mode is adopted.
In step (1), MS1 roaming in MSC/VLR1 initiates a call to MS2, here, the called number is N2.
In step (2), MSC/VLR1 initiates a request for obtaining routing information to HLR2 based on the called number N2.
In step (3), after finding MS2 is roaming in PLMN1 through searing the database, HLR2 notifies HLR1 to obtain the routing information.
In step (4), after receiving notification of obtaining routing information, HLR1 initiates a request for obtaining roaming number with N1 to MSC/VLR2.
In step (5), MSC/VLR2 returns the roaming number of MS2, i.e., MSRN1, to HLR1.
In step (6), HLR1 returns roaming number of MS2, i.e., MSRN1, to HLR2.
In step (7), after assigning the virtual roaming number MSRN2 that indicates location of GMSC, HLR2 stores the correspondence relationship between MSRN2 and MSRN1, and returns a routing response to MSC/VLR1 with MSRN2 as the roaming number.
In step (8), MSC/VLR1 establishes a voice to GMSC, with MSRN2 as the called number.
In step (9), after making called analysis on MSRN2, GMSC sends a request for obtaining routing information to HLR2.
In step (10), HLR2 returns a routing response to GMSC, with MSRN1 as the roaming number.
In step (11), GMSC controls establishment of the subsequent voice channel via MSC/VLR2.
In step (12), MS2 receives the call.

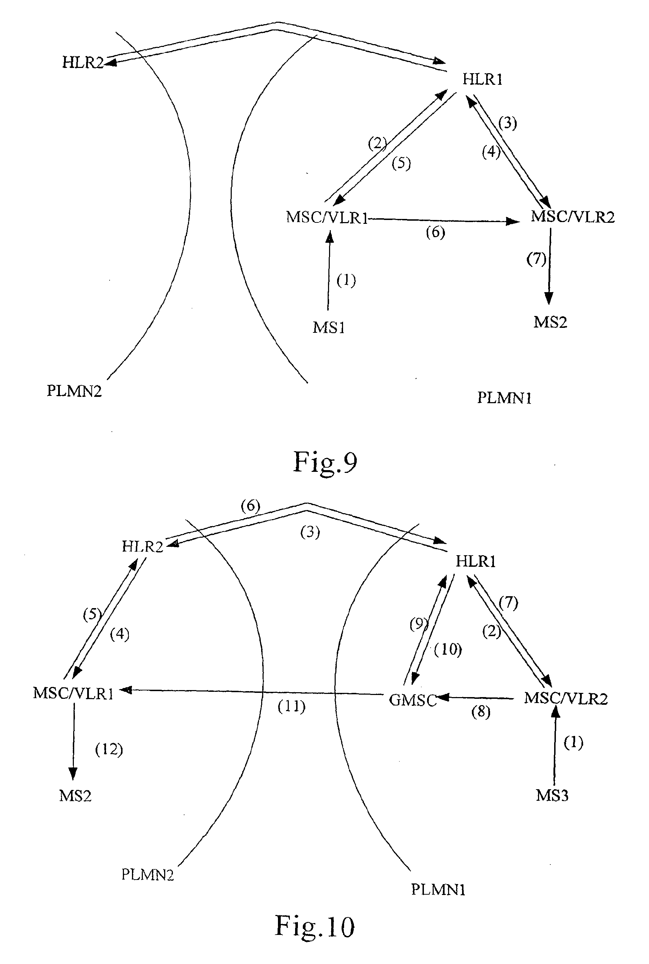

Now referring to Fig.9 which is similar with the case in Fig.2, MS2 is roaming in PLMN1, MS1 registered in PLMN1 initiates a call to MS2, here, the called number of MS2 is the number N1 according to MSN1 numbering plan. In this figure, HLR1 and HLR2 are two logic points in one entity, i.e., the master HLR according to the present invention; MSC/VLR1 and MSC/VLR2 are two MSC/VLRs in PLMN1.
In step (1), MS1 roaming in MSC/VLR1 initiates a call to MS2, with N1 as the called number.
In step (2), MSC/VLR1 initiates a request for obtaining routing information to HLR1 based on the called number N1.
In step (3), HLR1 sends a request for obtaining roaming number to MSC/VLR2.
In step (4), MSC/VLR2 returns the roaming number to HLR1.
In step (5), HLR1 returns a routing response to MSC/VLR1.
In step (6), MSC/VLR1 and MSC/VLR2 controls establishment of the subsequent voice channel.
In step (7), MS2 receives the call until any of two calling parties hangs up the phone.

The difference between the calling process in Fig.9 and that in Fig.2 are as follows: after roaming to PLMN1, it is not necessary for MS2 to make location register in HLR2 of PLMN2, but make location register in HLR1 that is the logic entity in the same network with the PLMN1; location register of MS2 can be made in HLR1 that is logically registered in PLMN1, because HLR1 and HLR2 are located in the same physical entity, it is possible for them to share subscriber data, and a subscriber can make location register at HLR1, by this means, a subscriber can roam across from PLMN2 having different format to PLMN1; MSC/VLR1 can obtain routing information of the subscriber directly from HLR1, because HLR1 is registered logically in PLMN1, so, even MSC/VLR1 and HLR2 logically belong to network equipments with different formats, MSC/VLR1 can also obtain routing information of MS2 through HLR1 having the same logic format, and thereby, establishing the voice channel.

Now referring to Fig.10 which has similar calling process with that illustrated in Fig.6, MS3 registered in PLMN1 initiates a call to MS2 which is registered in PLMN2, wherein the called number of MS2 is MSISDN number N1 that is assigned according to MSN1 of PLMN1 numbering plan. In the figure, HLR1 and HLR2 are two logic points in one entity, i.e., the master HLR according to the present invention; and GMSC is the gateway mobile switching center registered in PLMN1 of the present invention; while MSC/VLR1 and MSC/VLR2 are MSC/VLRs which are registered in PLMN1 and PLMN2 respectively.
In step (1), MS3 roaming in MSC/VLR2 initiates a call to MS2, here, the called number is number N1 that is assigned according to the PLMN1 numbering plan.
In step (2), MSC/VLR2 initiates a request for obtaining routing information to HLR1 according to the called number N1.
In step (3), after receiving the request for obtaining routing information, HLR1 analyzes data on the subscriber location information, and finds MS2 has registered in PLMN2 successfully, and notifies HLR2 to obtain routing information.
In step (4), after receiving the notification of obtaining routing information, HLR2 initiates a request for obtaining roaming number with N2 to MSC/VLR1.
In step (5), MSC/VLR1 returns real roaming number MSRN1 of MS2 to HLR2.
In step (6), HLR2 returns real roaming number MSRN1 of MS2 to HLR1.
In step (7), HLR1 assigns a virtual roaming number MSRN2, stores the correspondence relationship between MSRN2 and MSRN1, and returns the routing information and the roaming number MSRN2 to MSC/VLR.
In step (8), MSC/VLR2 establishes a communication channel to GMSC.
In step (9), GMSC sends a request for obtaining routing information to HLR1.
In step (10), HLR1 returns a routing response to GMSC, with MSRN1 as the roaming number.
In step (11), GMSC controls establishment of the subsequent voice channel.
In step (12), MS2 receives the call until any of two calling parties hangs up the phone.

The case in Fig.10 is basically similar with that in Fig.6.

If the circumstance illustrated in Fig.4 happens, which means a local subscriber who resides in the same home network PLMN with the subscriber MS2 initiates a call to MS2, the calling process is absolutely same with that depicted in Fig.4. There is no relation with HLR1, the subscriber number that HLR2 assigns to MS2 is the number N2 that satisfies the numbering plan of the service provider Operator2, therefore, the subscriber needs not to pay long distance fee.

After the voice channel is blocked and switched to the GMSC in the system, the inbound and outbound process illustrated in Fig.6 to Fig.10 can either be connected directly to the IP network through several kinds of interfaces provided by the GMSC, or be connected to diversified transmission networks through standard interfaces, in order to implement multiple choice on transmission networks. When a mobile subscriber initiates a call, he can dial different numbers, if he wants to communicate through standard international transmission network via international gateway office, the subscriber can roam across networks and then dial the subscriber number assigned in the roaming virtual network (plus country code where the roaming network locates before the number); if he wants to communicate through IP network or the straightforward transmission network that links with the service provider, the subscriber can roam across networks and then dial the subscriber number that is consistent with the network where the calling party locates, in order to realize the object of selecting long distance transmission networks.

With help of diversified GMSCs in different networks, the above-mentioned system according to the present invention can implement centralized management over the subscribers who are roaming across networks with diversified formats and different regions through logic points (virtual HLR) that are in the same physical entity but register in different networks, and enable the mobile subscriber registered in the physical entity, i.e., the master HLR, to roam freely, and meanwhile make choice freely among diversified long distance transmission networks interconnected to different networks, and thereby, making the long distance fee more reasonable and favorable, and therefore the long distance fee can be saved.

## Claims

1. A system for implementing virtual roaming and intercommunication among cellular systems, comprising:
two or more Public Land Mobile Networks, PLMNs;
**characterized in that** the system further comprises:
a master Home Location Register, HLR, adapted for assigning at least one subscriber number with at least one numbering plan corresponding to at least one of the PLMNs to subscribers, and two or more Gateway Mobile Switching Centers, GMSCs located in the PLMNs respectively and connected to a long distance transmission network via a gateway device,
when a calling party calls a called party via the subscriber number of the called party in accordance with the numbering plan of a PLMN of the calling party, the master HLR adapted for obtaining a real roaming number of the called party indicating the subscriber number with the numbering plan of a current roaming network of the called party, assigning a virtual subscriber roaming number indicating location of a GMSC in the PLMN of the calling party or the called party to the called party, saving relationship between the real roaming number and the virtual subscriber roaming number and returning the virtual subscriber roaming number to the PLMN of the calling party;
the GMSC in the PLMN of the calling party or the called party, which is found by the PLMN of the calling party through analyzing the virtual subscriber roaming number, obtaining the real subscriber roaming number of the called party from the master HLR according to the relationship between the real roaming number and the virtual subscriber roaming number and controlling establishment of a voice channel to a PLMN of the called party according to the real subscriber roaming number.

2. The system of claim 1, wherein said GMSCs are connected to two or more Visited Mobile Switching Centers, VMSCs of the PLMNs respectively.

3. The system of claim 1, wherein said long distance transmission network is an Internet Protocol net ,IP net, or a traditional long distance transmission network.

4. The system of claim 1, wherein said master HLR comprises at least two virtual HLRs which respectively correspond to each of the PLMNs, and format of each of the virtual HLR is consistent with that of corresponding PLMN.

5. A method for implementing virtual roaming and intercommunication among cellular systems, **characterized in that** the method comprises:
setting a master HLR for assigning at least one subscriber number with at least one numbering plan corresponding to at least one of two or more PLMNs to subscribers and setting two or more GMSCs which locate in the PLMNs respectively;
when a calling party calls a called party via the subscriber number of the called party in accordance with the numbering plan of a PLMN of the calling party, the master HLR obtaining a real roaming number of the called party indicating the subscriber number with the numbering plan of a current roaming network of the called party, assigning a virtual subscriber roaming number indicating location of a GMSC in the PLMN of the calling party or the called party to the called party, saving relationship between the real roaming number and the virtual subscriber roaming number, and returning the virtual subscriber roaming number to the PLMN of the calling party;
the GMSC in the PLMN of the calling party or the called party, which is found, by the PLMN of the calling party, through analyzing the virtual subscriber roaming number, obtaining the real subscriber roaming number of the called party from the master HLR according to the relationship between the real roaming number and the virtual subscriber roaming number and controlling establishment of a voice channel to a PLMN of the called party according to the real subscriber roaming number.

6. The method of claim 5, wherein said PLMNs include radio networks which are located in identical or different regions, belong to identical or different service providers and have identical or different formats.

7. The method of claim 5 or 6, wherein said formats of radio networks include Global System for Mobile Communications, GSM, and Code Division Multiple Access, CDMA, system.

8. The method of claim 5, wherein the process of setting a master HLR is setting a physical entity including at least two virtual HLRs for the PLMNs respectively, the format of each virtual HLR adopts that of the corresponding PLMN, and the numbering plan of each virtual HLR adopts that of the corresponding PLMN.

9. The method of claim 8, wherein said formats of virtual HLRs in the master HLR are either identical or different.

10. The method of claim 5, wherein each of the GMSCs locating in each of the PLMNs is a system access device, which is connected to a VMSC of corresponding PLMN.

11. The method of claim 5, wherein the master HLR assigns to the users subscriber numbers of all of the numbering plans corresponding to the PLMNs; or assigning the users subscriber numbers of part of the numbering plans corresponding to the PLMNs.

12. The method of claim 11, wherein a called number used by the calling party is consistent with the numbering plan of the home PLMN of the calling party.

13. The method of claim 12, wherein the process of the master HLR assigning the virtual subscriber roaming number to the called party comprises:
recording the virtual subscriber roaming number of the called party;
assigning the virtual subscriber roaming number for the called party according to the roaming location of the called party;
establishing relationship between the virtual subscriber roaming number and the real subscriber roaming number;
and the GMSC which is found through addressing with the virtual subscriber roaming number obtains the virtual subscriber roaming number of the called party from the master HLR.

14. The method of claim 5 or 10 or 13, wherein said assigning the virtual subscriber roaming number, obtaining the real subscriber roaming number and controlling establishment of a voice channel comprises:
when the calling party calls the called party in roaming with the numbering plan of the home PLMN of the calling party, a VMSC of the home PLMN of the calling party requesting routing information to the master HLR according to the called number;
the master HLR retrieving the real subscriber roaming number from a VLR of the roaming PLMN of the called party, assigning the virtual subscriber roaming number indicating the GMSC of the home PLMN of the calling party, storing the relationship between the real subscriber roaming number and the virtual subscriber roaming number, and returning the virtual subscriber roaming number to the VMSC of the home PLMN of the calling party;
the VMSC of the home PLMN of the calling party establishing a voice channel to the GMSC of the home PLMN of the calling party according to the virtual subscriber roaming number;
the GMSC of the home PLMN of the calling party obtaining the real subscriber roaming number from the master HLR and controlling the voice channel connection and accessing the called party.

15. The method of claim 5 or 10 or 13, wherein said assigning the virtual subscriber roaming number, obtaining the real subscriber roaming number and controlling establishment of a voice channel comprises:
when the calling party calls the called party in roaming with the numbering plan of the home PLMN of the calling party, a VMSC of the home PLMN of the calling party requesting routing information to the master HLR according to the called number;
the master HLR retrieving the real subscriber roaming number from a VLR of the roaming PLMN of the called party, assigning the virtual subscriber roaming number indicating the GMSC of the roaming PLMN of the called party, storing the relationship between the real subscriber roaming number and the virtual subscriber roaming number, and returning the virtual subscriber roaming number to the VMSC of the home PLMN of the calling party;
the VMSC of the home PLMN of the calling party establishing a voice channel to the GMSC of the roaming PLMN of the called party via the home PLMN of the calling party according to the virtual subscriber roaming number;
the GMSC of the roaming PLMN of the called party obtaining the real subscriber roaming number from the master HLR and controlling the voice channel connection and accessing the called party.

16. The method of claim 5 or 10 or 13, wherein said assigning the virtual subscriber roaming number, obtaining the real subscriber roaming number and controlling establishment of a voice channel comprises:
when the calling party calls the called party in roaming with the numbering plan of the home PLMN of the calling party, a VMSC of the home PLMN of the calling party requesting routing information to the master HLR according to the called number;
the master HLR assigning the virtual subscriber roaming number indicating the GMSC of the roaming PLMN of the called party, and returning the virtual subscriber roaming number to the VMSC of the home PLMN of the calling party;
the VMSC of the home PLMN of the calling party establishing a voice channel to the GMSC of the roaming PLMN of the called party via the home PLMN of the calling party according to the virtual subscriber roaming number;
the GMSC of the roaming PLMN of the called party requesting routing information of the called party to the master HLR;
the master HLR retrieving the real subscriber roaming number of the called party from the VLR of the roaming PLMN of the called party and returning the real subscriber roaming number to the GMSC of the roaming PLMN of the called party;
the GMSC of the roaming PLMN of the called party controlling the voice channel connection and accessing the called party according to the real subscriber roaming number.

17. The method of claim 5 or 10, wherein the master HLR sending a subscriber number that is consistent with the numbering plan of the roaming PLMN of the called party to the VLR of the roaming PLMN according to VMSC number of the roaming network.

## Patentansprüche

1. System zum Implementieren von virtuellem Roaming und Interkommunikation zwischen zellularen Systemen, umfassend:
zwei oder mehr öffentliche landgestützte Mobilnetze PLMN;
**dadurch gekennzeichnet, dass** das System ferner Folgendes umfasst:
ein Master-Heimatregister HLR, das dafür ausgelegt ist, mindestens eine Teilnehmernummer mit mindestens einem Nummerierungsplan, der mindestens einem der PLMN entspricht, an Teilnehmer zu vergeben, und zwei oder mehr Gateway Mobile Switching Centers GMSC, die sich jeweils in den PLMN befinden und über eine Gateway-Einrichtung mit einem Weitverkehrsnetz verbunden sind,
wobei, wenn ein anrufender Teilnehmer einen angerufenen Teilnehmer über die Teilnehmernummer der angerufenen Teilnehmers gemäß dem Nummerierungsplan eines PLMN des anrufenden Teilnehmers anruft, das Master-HLR dafür ausgelegt ist, eine reale Roaming-Nummer des angerufenen Teilnehmers zu erhalten, die die Teilnehmernummer mit dem Nummerierungsplan eines aktuellen Roaming-Netzes des angerufenen Teilnehmers angibt, eine virtuelle Teilnehmer-Roaming-Nummer, die den Ort eines GMSC in dem PLMN des anrufenden Teilnehmers oder des angerufenen Teilnehmers an den angerufenen Teilnehmer zu vergeben, die Beziehung zwischen der realen Roaming-Nummer und der virtuellen Teilnehmer-Roaming-Nummer abzuspeichern und die virtuelle Teilnehmer-Roaming-Nummer an das PLMN des anrufenden Teilnehmers zurückzugeben;
wobei das GMSC in dem PLMN des anrufenden Teilnehmers oder des angerufenen Teilnehmers, das durch das PLMN des anrufenden Teilnehmers durch Analysieren der virtuellen Teilnehmer-Roaming-Nummer gefunden wird, die reale Teilnehmer-Roaming-Nummer des angerufenen Teilnehmers gemäß der Beziehung zwischen der realen Roaming-Nummer und der virtuellen Teilnehmer-Roaming-Nummer von dem Master-HLR erhält und die Herstellung eines Sprachkanals zu einem PLMN des angerufenen Teilnehmers gemäß der realen Teilnehmer-Roaming-Nummer steuert.

2. System nach Anspruch 1, wobei die GMSC jeweils mit zwei oder mehr Visited Mobile Switching Centers VMSC der PLMN verbunden sind.

3. System nach Anspruch 1, wobei das Weitverkehrsnetz ein Netz mit Internet-Protokoll bzw. IP-Netz oder ein traditionelles Weitverkehrsnetz ist.

4. System nach Anspruch 1, wobei das Master-HLR mindestens zwei virtuelle HLR umfasst, die jeweils jedem der PLMN entsprechen, und das Format jedes der virtuellen HLR mit dem des entsprechenden PLMN vereinbar ist.

5. Verfahren zum Implementieren von virtuellem Roaming und Interkommunikation zwischen zellularen Systemen, **gekennzeichnet durch** die folgenden Schritte:
Setzen eines Master-HLR zum Vergeben mindestens einer Teilnehmernummer mit mindestens einem Nummerierungsplan, der mindestens einem von zwei oder mehr PLMN entspricht, an Teilnehmer und Setzen von zwei oder mehr GMSC, die sich jeweils in den PLMN befinden;
wobei, wenn ein anrufender Teilnehmer einen angerufenen Teilnehmer über die Teilnehmernummer des angerufenen Teilnehmers gemäß dem Nummerierungsplan eines PLMN des anrufenden Teilnehmers anruft, das Master-HLR eine reale Roaming-Nummer des angerufenen Teilnehmers, die die Teilnehmernummer mit dem Nummerierungsplan eines aktuellen Roaming-Netzes des angerufenen Teilnehmers angibt, erhält, eine virtuelle Teilnehmer-Roaming-Nummer, die den Ort eines GMSC in dem PLMN des anrufenden Teilnehmers oder des angerufenen Teilnehmers angibt, an den angerufenen Teilnehmer vergibt, die Beziehung zwischen der realen Roaming-Nummer und der virtuellen Teilnehmer-Roaming-Nummer abspeichert und die virtuelle Teilnehmer-Roaming-Nummer an das PLMN des anrufenden Teilnehmers zurückgibt;
wobei das GMSC in dem PLMN des anrufenden Teilnehmers oder des angerufenen Teilnehmers, das **durch** das PLMN des anrufenden Teilnehmers **durch** Analysieren der virtuellen Teilnehmer-Roaming-Nummer gefunden wird, die reale Teilnehmer-Roaming-Nummer des angerufenen Teilnehmers gemäß der Beziehung zwischen der realen Roaming-Nummer und der virtuellen Teilnehmer-Roaming-Nummer von dem Master-HLR erhält und die Herstellung eines Sprachkanals zu einem PLMN des angerufenen Teilnehmers gemäß der realen Teilnehmer-Roaming-Nummer steuert.

6. Verfahren nach Anspruch 5, wobei die PLMN Funknetze umfassen, die sich in identischen oder verschiedenen Regionen befinden, zu identischen oder verschiedenen Dienstanbietern gehören und identische oder verschiedene Formate aufweisen.

7. Verfahren nach Anspruch 5 oder 6, wobei die Formate von Funknetzen ein System mit Global System for Mobile Communications GSM und mit Code Division Multiple Access CDMA umfassen.

8. Verfahren nach Anspruch 5, wobei der Prozess des Setzens eines Master-HLR eine physische Entität, die mindestens zwei virtuelle HLR umfasst, jeweils für die PLMN setzt, das Format jedes virtuellen HLR das des entsprechenden PLMN annimmt und der Nummerierungsplan jedes virtuellen HLR den des entsprechenden PLMN annimmt.

9. Verfahren nach Anspruch 8, wobei die Formate virtueller HLR in dem Master-HLR entweder identisch oder verschieden sind.

10. Verfahren nach Anspruch 5, wobei jedes der GMSC, die sich in jedem der PLMN befinden, eine Systemzugangseinrichtung ist, die mit einem VMSC des entsprechenden PLMN verbunden ist.

11. Verfahren nach Anspruch 5, wobei das Master-HLR Teilnehmernummern aller Nummerierungspläne, die den PLMN entsprechen, an die Benutzer vergibt; oder Teilnehmernummern eines Teils der Nummerierungspläne, die den PLMN entsprechen, an die Benutzer vergibt.

12. Verfahren nach Anspruch 11, wobei eine von dem anrufenden Teilnehmer benutzte angerufene Nummer mit dem Nummerierungsplan des Heimat-PLMN des anrufenden Teilnehmers vereinbar ist.

13. Verfahren nach Anspruch 12, wobei der Prozess des Vergebens der virtuellen Teilnehmer-Roaming-Nummer an den angerufenen Teilnehmer durch das Master-HLR Folgendes umfasst:
Aufzeichnen der virtuellen Teilnehmer-Roaming-Nummer des angerufenen Teilnehmers;
Vergeben der virtuellen Teilnehmer-Roaming-Nummer für den angerufenen Teilnehmer gemäß dem Roaming-Ort des angerufenen Teilnehmers;
Herstellen einer Beziehung zwischen der virtuellen Teilnehmer-Roaming-Nummer und der realen Teilnehmer-Roaming-Nummer;
und das GMSC, das durch Adressierung mit der virtuellen Teilnehmer-Roaming-Nummer gefunden wird, erhält die virtuelle Teilnehmer-Roaming-Nummer des angerufenen Teilnehmers von dem Master-HLR.

14. Verfahren nach Anspruch 5 oder 10 oder 13, wobei das Vergeben der virtuellen Teilnehmer-Roaming-Nummer, das Erhalten der realen Teilnehmer-Roaming-Nummer und das Steuern der Herstellung eines Sprachkanals Folgendes umfasst:
wenn der anrufende Teilnehmer den angerufenen Teilnehmer beim Roaming mit dem Nummerierungsplan des Heimat-PLMN des anrufenden Teilnehmers anruft, fordert ein VMSC des Heimat-PLMN des anrufenden Teilnehmers gemäß der angerufenen Nummer Routinginformationen zu dem Master-HLR an;
das Master-HLR anruft die reale Teilnehmer-Roaming-Nummer von einem VLR des Roaming-PLMN des angerufenen Teilnehmers ab, vergibt die virtuelle Teilnehmer-Roaming-Nummer, die das GMSC des Heimat-PLMN des anrufenden Teilnehmers angibt, speichert die Beziehung zwischen der realen Teilnehmer-Roaming-Nummer und der virtuellen Teilnehmer-Roaming-Nummer und gibt die virtuelle Teilnehmer-Roaming-Nummer an das VMSC des Heimat-PLMN des anrufenden Teilnehmers zurück;
das VMSC des Heimat-PLMN des anrufenden Teilnehmers stellt gemäß der virtuellen Teilnehmer-Roaming-Nummer einen Sprachkanal zu dem GMSC des Heimat-PLMN des anrufenden Teilnehmers her;
das GMSC des Heimat-PLMN des anrufenden Teilnehmers erhält die reale Teilnehmer-Roaming-Nummer von dem Master-HLR und steuert die Sprachkanalverbindung und das Zugreifen auf den angerufenen Teilnehmer.

15. Verfahren nach Anspruch 5 oder 10 oder 13, wobei das Vergeben der virtuellen Teilnehmer-Roaming-Nummer, das Erhalten der realen Teilnehmer-Roaming-Nummer und das Steuern der Herstellung eines Sprachkanals Folgendes umfasst:
wenn der anrufende Teilnehmer den angerufenen Teilnehmer beim Roaming mit dem Nummerierungsplan des Heimat-PLMN des anrufenden Teilnehmers anruft, fordert ein VMSC des Heimat-PLMN des anrufenden Teilnehmers gemäß der angerufenen Nummer Routing-Informationen zu dem Master-HLR an;
das Master-HLR anruft die reale Teilnehmer-Roaming-Nummer von einem VLR des Roaming-PLMN des angerufenen Teilnehmers ab, vergibt die virtuelle Teilnehmer-Roaming-Nummer, die das GMSC des Roaming-PLMN des angerufenen Teilnehmers angibt, speichert die Beziehung zwischen der realen Teilnehmer-Roaming-Nummer und der virtuellen Teilnehmer-Roaming-Nummer und gibt die virtuelle Teilnehmer-Roaming-Nummer an das VMSC des Heimat-PLMN des anrufenden Teilnehmers zurück;
das VMSC des Heimat-PLMN des anrufenden Teilnehmers stellt über das Heimat-PLMN des anrufenden Teilnehmers gemäß der virtuellen Teilnehmer-Roaming-Nummer einen Sprachkanal zu dem GMSC des Roaming-PLMN des angerufenen Teilnehmers her;
das GMSC des Roaming-PLMN des angerufenen Teilnehmers erhält die reale Teilnehmer-Roaming-Nummer von dem Master-HLR und steuert die Sprachkanalverbindung und das Zugreifen auf den angerufenen Teilnehmer.

16. Verfahren nach Anspruch 5 oder 10 oder 13, wobei das Vergeben der virtuellen Teilnehmer-Roaming-Nummer, das Erhalten der realen Teilnehmer-Roaming-Nummer und das Steuern der Herstellung eines Sprachkanals Folgendes umfasst:
wenn der anrufende Teilnehmer den angerufenen Teilnehmer beim Roaming mit dem Nummerierungsplan des Heimat-PLMN des anrufenden Teilnehmers anruft, fordert ein VMSC des Heimat-PLMN des anrufenden Teilnehmers gemäß der angerufenen Nummer Routing-Informationen zu dem Master-HLR an;
das Master-HLR vergibt die virtuelle Teilnehmer-Roaming-Nummer, die das GMSC des Roaming-PLMN des angerufenen Teilnehmers angibt, und gibt die virtuelle Teilnehmer-Roaming-Nummer an das VMSC des Heimat-PLMN des anrufenden Teilnehmers zurück;
das VMSC des Heimat-PLMN des anrufenden Teilnehmers stellt über das Heimat-PLMN des anrufenden Teilnehmers gemäß der virtuellen Teilnehmer-Roaming-Nummer einen Sprachkanal zu dem GMSC des Roaming-PLMN des angerufenen Teilnehmers her;
das GMSC des Roaming-PLMN des angerufenen Teilnehmers fordert Routing-Informationen des angerufenen Teilnehmers zu dem Master-HLR an;
das Master-HLR anruft die reale Teilnehmer-Roaming-Nummer des angerufenen Teilnehmers von dem VLR des Roaming-PLMN des angerufenen Teilnehmers ab und gibt die reale Teilnehmer-Roaming-Nummer an das GMSC des Roaming-PLMN des angerufenen Teilnehmers zurück;
das GMSC des Roaming-PLMN des angerufenen Teilnehmers steuert die Sprachkanalverbindung und das Zugreifen auf den angerufenen Teilnehmer gemäß der realen Teilnehmer-Roaming-Nummer.

17. Verfahren nach Anspruch 5 oder 10, wobei das Master-HLR eine Teilnehmemummer, die mit dem Nummerierungsplan des Roaming-PLMN des angerufenen Teilnehmers vereinbar ist, gemäß der VMSC-Nummer des Roaming-Netzes zu dem VLR des Roaming-PLMN sendet.

## Revendications

1. Système d'implémentation d'itinérance et d'intercommunication virtuelles entre des systèmes cellulaires, comprenant :
deux ou plusieurs Réseaux Mobiles Terrestres Publics, PLMN ;
**caractérisé en ce que** le système comprend en outre :
un Enregistreur de Position de Rattachement, HLR, maître, adapté pour attribuer au moins un numéro d'abonné avec au moins un plan de numérotation correspondant à au moins l'un des PLMN aux abonnés, et deux ou plusieurs Centres de Commutation de Services Mobiles Passerelles, GMSC, situés dans les PLMN respectivement et connectés à un réseau de transmission longue distance par l'intermédiaire d'un dispositif passerelle,
quand un appelant appelle un appelé par l'intermédiaire du numéro d'abonné de l'appelé conformément au plan de numérotation d'un PLMN de l'appelant, le HLR maître étant adapté pour obtenir un numéro d'itinérance réel de l'appelé indiquant le numéro d'abonné avec le plan de numérotation d'un réseau d'itinérance courant de l'appelé, attribuer un numéro d'itinérance d'abonné virtuel indiquant la position d'un GMSC dans le PLMN de l'appelant ou de l'appelé à l'appelé, sauvegarder la relation entre le numéro d'itinérance réel et le numéro d'itinérance d'abonné virtuel et
renvoyer le numéro d'itinérance d'abonné virtuel au PLMN de l'appelant ;
l'obtention par le GMSC dans le PLMN de l'appelant ou de l'appelé, qui est trouvé par le PLMN de l'appelant par analyse du numéro d'itinérance d'abonné virtuel, du numéro d'itinérance d'abonné réel de l'appelé depuis le HLR maître en fonction de la relation entre le numéro d'itinérance réel et le numéro d'itinérance d'abonné virtuel et la commande par le GMSC de l'établissement d'un canal vocal vers un PLMN de l'appelé en fonction du numéro d'itinérance d'abonné réel.

2. Système selon la revendication 1, dans lequel lesdits GMSC sont connectés à deux ou plusieurs Centres de Commutation de Services Mobiles Visités, VMSC, des PLMN respectivement.

3. Système selon la revendication 1, dans lequel ledit réseau de transmission longue distance est un réseau à Protocole Internet, IP net, ou un réseau de transmission longue distance traditionnel.

4. Système selon la revendication 1, dans lequel ledit HLR maître comprend au moins deux HLR virtuels qui correspondent respectivement à chacun des PLMN, et le format de chacun des HLR virtuels est cohérent avec celui du PLMN correspondant.

5. Procédé d'implémentation d'itinérance et d'intercommunication virtuelles entre des systèmes cellulaires, **caractérisé en ce que** le procédé comprend :
l'établissement d'un HLR maître pour attribuer au moins un numéro d'abonné avec au moins un plan de numérotation correspondant à au moins l'un de deux ou plusieurs PLMN aux abonnés, et l'établissement de deux ou plusieurs GMSC situés dans les PLMN respectivement ;
quand un appelant appelle un appelé par l'intermédiaire du numéro d'abonné de l'appelé conformément au plan de numérotation d'un PLMN de l'appelant, l'obtention par le HLR maître d'un numéro d'itinérance réel de l'appelé indiquant le numéro d'abonné avec le plan de numérotation d'un réseau d'itinérance courant de l'appelé, l'attribution par le HLR maître d'un numéro d'itinérance d'abonné virtuel indiquant la position d'un GMSC dans le PLMN de l'appelant ou de l'appelé à l'appelé, la sauvegarde par le HLR maître de la relation entre le numéro d'itinérance réel et le numéro d'itinérance d'abonné virtuel et le renvoi par le HLR maître du numéro d'itinérance d'abonné virtuel au PLMN de l'appelant ;
l'obtention par le GMSC dans le PLMN de l'appelant ou de l'appelé, qui est trouvé, par le PLMN de l'appelant, par analyse du numéro d'itinérance d'abonné virtuel, du numéro d'itinérance d'abonné réel de l'appelé depuis le HLR maître en fonction de la relation entre le numéro d'itinérance réel et le numéro d'itinérance d'abonné virtuel et la commande par le GMSC de l'établissement d'un canal vocal vers un PLMN de l'appelé en fonction du numéro d'itinérance d'abonné réel.

6. Procédé selon la revendication 5, dans lequel lesdits PLMN comportent des réseaux radio qui sont situés dans des régions identiques ou différentes, appartiennent à des fournisseurs de services identiques ou différents et ont des formats identiques ou différents.

7. Procédé selon la revendication 5 ou 6, dans lequel lesdits formats de réseaux radio comportent le système global de communications mobiles, GSM, et le système d'accès multiple par différence de code, AMDC.

8. Procédé selon la revendication 5, dans lequel le processus d'établissement d'un HLR maître consiste en l'établissement d'une unité physique comportant au moins deux HLR virtuels pour les PLMN respectivement, le format de chaque HLR virtuel adoptant celui du PLMN correspondant, et le plan de numérotation de chaque HLR virtuel adoptant celui du PLMN correspondant.

9. Procédé selon la revendication 8, dans lequel lesdits formats des HLR virtuels dans le HLR maître sont identiques ou différents.

10. Procédé selon la revendication 5, dans lequel chacun des GMSC situés dans chacun des PLMN est un dispositif à accès système, lequel est connecté à un VMSC du PLMN correspondant.

11. Procédé selon la revendication 5, dans lequel le HLR maître attribue aux utilisateurs des numéros d'abonnés de tous les plans de numérotation correspondant aux PLMN ; ou attribue aux utilisateurs des numéros d'abonnés d'une partie des plans de numérotation correspondant aux PLMN.

12. Procédé selon la revendication 11, dans lequel un numéro appelé utilisé par l'appelant est cohérent avec le plan de numérotation du PLMN de rattachement de l'appelant.

13. Procédé selon la revendication 12, dans lequel le processus d'attribution par le HLR maître du numéro d'itinérance d'abonné virtuel à l'appelé comprend :
l'enregistrement du numéro d'itinérance d'abonné virtuel de l'appelé ;
l'attribution du numéro d'itinérance d'abonné virtuel de l'appelé en fonction de l'emplacement d'itinérance de l'appelé ;
l'établissement d'une relation entre le numéro d'itinérance d'abonné virtuel et le numéro d'itinérance d'abonné réel ;
et le GMSC qui est trouvé par adressage avec le numéro d'itinérance d'abonné virtuel obtient le numéro d'itinérance d'abonné virtuel de l'appelé à partir du HLR maître.

14. Procédé selon la revendication 5 ou 10 ou 13, dans lequel ladite attribution du numéro d'itinérance d'abonné virtuel, l'obtention du numéro d'itinérance d'abonné réel et la commande de l'établissement d'un canal vocal comprennent :
quand l'appelant appelle l'appelé en itinérance avec le plan de numérotation du PLMN de rattachement de l'appelant, la requête par un VMSC du PLMN de rattachement de l'appelant d'informations de routage auprès du HLR maître en fonction du numéro appelé ;
l'extraction par le HLR maître du numéro d'itinérance d'abonné réel d'un VLR du PLMN d'itinérance de l'appelé, l'attribution par le HLR maître du numéro d'itinérance d'abonné virtuel indiquant le GMSC du PLMN de rattachement de l'appelant, la sauvegarde par le HLR maître de la relation entre le numéro d'itinérance d'abonné réel et le numéro d'itinérance d'abonné virtuel et le renvoi par le HLR maître du numéro d'itinérance d'abonné virtuel au VMSC du PLMN de rattachement de l'appelant ;
l'établissement par le VMSC du PLMN de rattachement de l'appelant d'un canal vocal vers le GMSC du PLMN de rattachement de l'appelé en fonction du numéro d'itinérance d'abonné virtuel ;
l'obtention par le GMSC du PLMN de rattachement de l'appelant du numéro d'itinérance d'abonné réel depuis le HLR maître et la commande par le GMSC de la connexion de canal vocal et l'accès par le GMSC à l'appelé.

15. Procédé selon la revendication 5 ou 10 ou 13, dans lequel ladite attribution du numéro d'itinérance d'abonné virtuel, l'obtention du numéro d'itinérance d'abonné réel et la commande de l'établissement d'un canal vocal comprennent :
quand l'appelant appelle l'appelé en itinérance avec le plan de numérotation du PLMN de rattachement de l'appelant, la requête par un VMSC du PLMN de rattachement de l'appelant d'informations de routage auprès du HLR maître en fonction du numéro appelé ;
l'extraction par le HLR maître du numéro d'itinérance d'abonné réel d'un VLR du PLMN d'itinérance de l'appelé, l'attribution par le HLR maître du numéro d'itinérance d'abonné virtuel indiquant le GMSC du PLMN d'itinérance de l'appelé, la sauvegarde par le HLR maître de la relation entre le numéro d'itinérance d'abonné réel et le numéro d'itinérance d'abonné virtuel et le renvoi par le HLR maître du numéro d'itinérance d'abonné virtuel au VMSC du PLMN de rattachement de l'appelant ;
l'établissement par le VMSC du PLMN de rattachement de l'appelant d'un canal vocal vers le GMSC du PLMN d'itinérance de l'appelé par l'intermédiaire du PLMN de rattachement de l'appelant en fonction du numéro d'itinérance d'abonné virtuel ;
l'obtention par le GMSC du PLMN d'itinérance de l'appelé du numéro d'itinérance d'abonné réel depuis le HLR maître et la commande par le GMSC de la connexion de canal vocal et l'accès par le GMSC à l'appelé.

16. Procédé selon la revendication 5 ou 10 ou 13, dans lequel ladite attribution du numéro d'itinérance d'abonné virtuel, l'obtention du numéro d'itinérance d'abonné réel et la commande de l'établissement d'un canal vocal comprennent :
quand l'appelant appelle l'appelé en itinérance avec le plan de numérotation du PLMN de rattachement de l'appelant, la requête par un VMSC du PLMN de rattachement de l'appelant d'informations de routage auprès du HLR maître en fonction du numéro appelé ;
l'attribution par le HLR maître du numéro d'itinérance d'abonné virtuel indiquant le GMSC du PLMN d'itinérance de l'appelé, et le renvoi par le HLR maître du numéro d'itinérance d'abonné virtuel au VMSC du PLMN de rattachement de l'appelant ;
l'établissement par le VMSC du PLMN de rattachement de l'appelant d'un canal vocal avec le GMSC du PLMN d'itinérance de l'appelé par l'intermédiaire du PLMN de rattachement de l'appelant en fonction du numéro d'itinérance d'abonné virtuel ;
la requête par le GMSC du PLMN d'itinérance de l'appelé d'informations de routage de l'appelé auprès du HLR maître ;
l'extraction par le HLR maître du numéro d'itinérance d'abonné réel de l'appelé depuis le VLR du PLMN d'itinérance de l'appelé et le renvoi par le HLR maître du numéro d'itinérance d'abonné réel au GMSC du PLMN d'itinérance de l'appelé ;
la commande par le GMSC du PLMN d'itinérance de l'appelé de la connexion de canal vocal et l'accès par le GMSC à l'appelé en fonction du numéro d'itinérance d'abonné réel.

17. Procédé selon la revendication 5 ou 10, dans lequel le HLR maître envoie un numéro d'abonné qui est cohérent avec le plan de numérotation du PLMN d'itinérance de l'appelé au VLR du PLMN d'itinérance en fonction du numéro VMSC du réseau d'itinérance.
